# EUROPEAN PATENT SPECIFICATION

(11) **EP 0 552 828 B1**
(45) Date of publication and mention of the grant of the patent: **18.03.1998**
(21) Application number: 93200060.7
(22) Date of filing: 12.01.1993
(51) Int. Cl.: G06K 7/10, G06K 19/06

(54) **Tag**
Etikett
Etiquette

(30) Priority: 24.01.1992 NL 9200142
(43) Date of publication of application: 28.07.1993
(73) Proprietor: Koninklijke PTT Nederland N.V., 2509 CH Den Haag (NL)
(72) Inventor: de Kok, Eric Johannes, 2631 AC Nootdorp (NL); Smit, Edward Franciscus Johannes, 2353 SE Leiderdorp (NL)

(56) References cited:
- EP-A- 0 533 062
- US-A- 4 390 880
- US-A- 4 822 990

## Description

### A. Background of the invention

The invention relates to a tag comprising
- an aerial for receiving a carrier wave which has been modulated with first information according to a first modulation method and for transmitting a signal which has been modulated with second information according to a second modulation method,
- processor means for processing said first information and for generating said second information, and
- a diode for demodulating said modulated carrier wave.

Such a tag is disclosed in US-A-4 390 880.

US 4,647,931 discloses an identification system which comprises a detection station which emits a radiofrequency signal (the carrier wave) and comprises a tag which receives said signal. The tag modulates said signal in phase alternately with a first frequency and a second frequency in accordance with a predetermined code (the tag identification) and returns the modulated signal to the station, which demodulates said modulated signal and thereby determines the code for identifying the tag. In this connection, the station comprises the carrier wave transmitter for transmitting the carrier wave and the tag identification detector which is adapted as a phase or frequency demodulator for detecting the tag identification. The tag comprises the carrier wave receiver, adapted as an aerial for receiving the carrier wave, and the tag identification generator, which is adapted as a phase or frequency modulator, coupled to two oscillators, for generating the tag identification. The transmission of the tag identification by means of the carrier wave has the advantage that the tag does not have to have its own transmitter, but emits on the basis of reflecting the carrier wave which is irradiated and is emitted with adequate power by the station. Of course, it is also possible to transmit the tag identification separately from the carrier wave, in which case the tag has to have its own transmitter and the carrier wave does not act as a carrier but is used only to activate and/or supply the tag.

Such a known identification system has the disadvantage that it is not possible therewith to transmit data from the detection station to the tag. If the identification system is used, for example, for roller containers or train wagons, which are each provided with a tag, it is impossible, for example in the event of disasters, to alter the routing information stored in the tag.

EP-A-0 533 062 which falls within the terms of Article 54(3) EPC, discloses an antenna for transceiver devices. The antenna has a diode which acts to demodulate a modulated carrier wave as well as to modulate the carrier wave.

### B. Summary of the invention

According to the invention, the tag defined in the introductory portion is characterised in that said second modulation method takes place via said diode which is situated between said aerial and said processor means.

In this case, the tag is of very simple construction because one diode functions both as a demodulator and as a modulator.

In a first embodiment, the tag according to the invention is characterised in that said carrier wave has been modulated with an activation signal, the tag comprising
- an activation signal detector, coupled to said diode, for detecting said activation signal,
- power supply means for supplying power to said processor means, and
- switch-on means, coupled to said activation signal detector and to said power supply means, for switching on said power supply means in response to said activation signal.

In a second embodiment the tag is characterised in that said switch-on means switch on said power supply means for a predetermined time interval.

In the third embodiment the tag is characterised in that said switch-on means are coupled to said processor means for receiving a reactivation signal from said processor means for extending said predetermined time interval.

In a fourth embodiment the tag is characterised in that said activation signal detector comprises boosting means for boosting said activation signal.

As a result of adequately boosting the voltage of the activation signal in the tag, for example, by means of a resonance circuit, the switch-on means can thereby be activated and thereby switch on the power supply means, such as, for example, a battery, for the predetermined time interval, as a result of which the energy available therein is managed economically. The requirement often imposed that the tag must be able to function for not less than five years with one battery is consequently adequately met.

In a fifth embodiment, the tag according to the invention is characterised in that the tag is provided with filtering means, the frequency of said first information and the frequency of said activation signal being different from one another.

If a first tag has data transmitted to it after having been activated, this prevents a second tag being incorrectly activated on the basis of said data.

In a sixth embodiment, the tag according to the invention is characterised in that the first modulation method is based on amplitude modulation and the second modulation method is based on frequency or phase modulation.

Such a tag has the advantage that the first information on the one hand, and the second information, on the other hand, are modulated in different ways with the same carrier wave, as a result of which unambiguous demodulation is possible. Furthermore, any displacement of the tag has a negligible effect on the demodulation process of the amplitude-modulated carrier wave and said demodulation is very simple, as a result of which the tag can be produced as cheaply as possible in large numbers. Any displacement of the tag could have an appreciable effect on the demodulation process of the frequency- or phase-modulated carrier wave in the station, but provisions can be made therein, in a simple manner, which reduce said effect to an adequate extent. Furthermore, the most power-dissipating modulation method (amplitude modulation) takes place in the station, which generally has a large energy source, while the frequency modulation, which is largely based on reflection, takes place in the tag.

In a seventh embodiment, the tag according to the invention is characterised in that said signal comprises at least a part of a reflection of said carrier wave.

### C. Reference

US 4,647,931

### D. Exemplary embodiment

The invention will be explained in greater detail by reference to an exemplary embodiment shown in the figures. In the figures:
Figure 1 shows a detection station of an identification system,
Figure 2 shows a tag according to the invention, and
Figure 3 shows a diagram of subsequent emission probabilities of tags which are selected statistically in the case of collision in order to perform a subsequent emission.

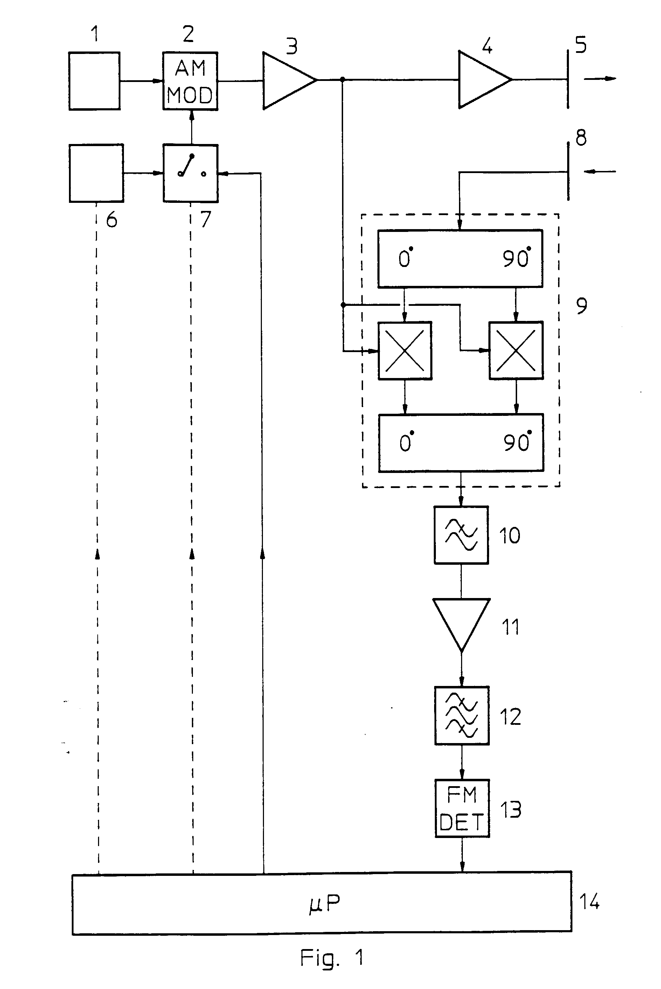

The detection station shown in Figure 1 comprises a carrier wave transmitter 1, constructed as a 2.49 GHz oscillator, which is coupled to a carrier-wave input of data modulation means 2, constructed as an amplitude modulator (AM modulator). An output of AM modulator 2 is coupled, via an amplifier 3 and a transmitting amplifier 4, to a transmitting aerial 5 in order to emit a carrier wave. A signal input of AM modulator 2 is coupled to a main contact of a switch 7, of which a first switch contact is coupled to an activation signal generator 6, constructed as 3 MHz oscillator and a second switch contact is coupled to a processor 14, which furthermore controls switch 7 and activation signal generator 6. The detection station furthermore comprises a receiving aerial 8, which is coupled to an input of a mixing stage 9, constructed in a manner known to the specialist (both mixers thereof are coupled to an output of amplifier 3). An output of mixing stage 9 is coupled to a processor 14 via a low-pass filter 10 (cut-off frequency 2.2 MHz), via an amplifier 11, via a band-pass filter 12 (centre frequency 2 MHz, bandwidth 100 kHz) and via an FM detector 13. Here, FM detector 13 and processor 14 jointly form a tag identification generator.

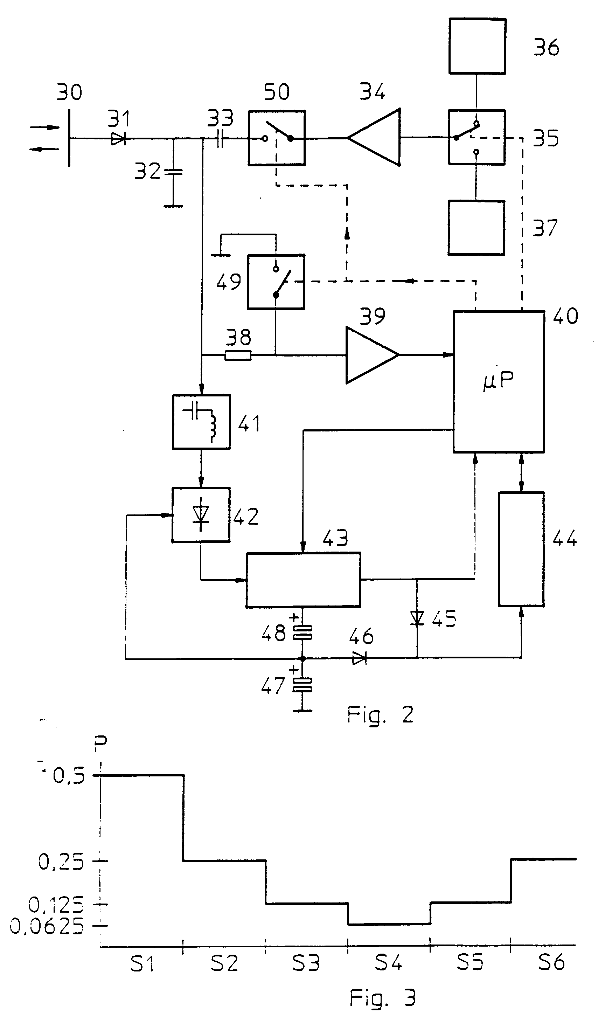

The operation of the detection station shown in Figure 1 is as follows. In the quiescent state, activation signal generator 6 is switched off and switch 7 is in the position shown (the first switch contact is connected through to the main contact). Carrier-wave transmitter 1 generates the carrier wave which is emitted via transmitting aerial 5 and which is not amplitude-modulated because no signal is presented to the signal input of AM modulator 2. As soon as a tag is to be activated, processor 14 switches on activation signal generator 6, as a result of which the latter generates a 3 MHz activation signal, with which the carrier wave is amplitude-modulated and then emitted. The tag, which is not shown in Figure 1 and will be discussed extensively in the description of Figure 2, responds thereto by frequency-modulating the carrier wave received on the basis of frequency shift keying (FSK), a logic one corresponding to 2.05 MHz and a logic zero corresponding to 1.95 MHz, and by returning the frequency-modulated carrier wave on the basis of reflection. A receiving aerial 8 receives said signal and mixing stage 9 converts it, after which the converted signal is filtered by low-pass filter 10 in order to block any 3 Mhz component originating from the activation signal. After that, the signal then obtained is amplified by amplifier 11 and filtered by band-pass filter 12 in order that FM detector 13 and processor 14 are able to detect the series of logic ones and zeros transmitted by the tag, which together form the tag identification. In this way, the tag is identified by the detection station.

If data is then to be transmitted from the detection station to the tag, processor 14 sends a control signal to switch 7, which consequently moves to the other position (the second switch contact is connected through to the main contact). The data generated by processor 14 (data rate 9600 baud) is fed via switch 7 to AM modulator 2 which amplitude-modulates the carrier wave with said data. The modulated carrier wave is then emitted to the tag via amplifier 3, transmitting amplifier 4 and transmitting aerial 5. Preferably, the data frequency and the signal activation frequency are different from one another in order to avoid another tag being activated by the transmission of data to a particular tag.

The tag shown in Figure 2 comprises a transmitting/receiving aerial 30, which is connected to an anode of a diode 31, whose cathode is connected to earth via a capacitor 32. The cathode is furthermore connected to a capacitor 33, which is coupled to a first contact of a switch 50, whose second contact is coupled to an output of buffer 34. An input of buffer 34 is connected to a main contact of a switch 35. Switch 35 has a first and second switch contact which are connected to a 2.05 Mhz oscillator 36 and a 1.95 Mhz oscillator 37, respectively. The cathode is connected, still further, to an input of an amplifier 39 via a resistor 38 and to a resonance circuit 41, the input of amplifier 39 being furthermore connected to a first contact of a switch 49. An output of amplifier 39 is connected to a processor 40, which controls switch 35 and switches 49 and 50. A second contact of switch 49 is connected to earth. Resonance circuit 41 is connected via an activation signal detector 42 to a first control input of switch-on means 43, of which a second control input is coupled to processor 40. An output of switch-on means 43 is coupled to a power supply input of the processor and via a diode 45 to a power supply input of a memory 44 (read [sic] access memory or RAM). The tag furthermore comprises power supply means 47, 48 which are formed by two batteries which are connected in series and which are situated between earth and a power supply input of switch-on means 43. A centre contact of power supply means 47, 48 is connected to a power supply input of activation signal detector 42 and is coupled, via a diode 46, to the power supply input of the RAM 44, which is furthermore coupled to processor 40.

In this connection, transmitting/receiving aerial 30 forms a carrier wave receiver, and processor 40, switch 35, oscillator 37 and 36, and buffer 34 form a tag identification generator. Diode 31 functions as data demodulation means (AM demodulator) and as tag identification modulator (FSK modulator). Resonance circuit 41 has a resonance frequency of 3 Mhz and functions as filtering means.

The operation of the tag shown in Figure 2 is as follows. An activation signal emitted by the detection station in the form of a carrier wave amplitude-modulated with a 3 Mhz signal is received by transmitting/receiving aerial 30 and demodulated by diode 31. The voltage of the 3 Mhz activation signal is boosted by resonance circuit 41 and detected by activation signal detector 42, as a result of which switch-on means 43 are activated for a predetermined time interval. During this time interval, power supply means 47, 48 are coupled by means of an internal through coupling in switch-on means 43 to the power supply input of processor 40, which is consequently provided with voltage for the predetermined time interval. Processor 40 closes switches 49 and 50 and drives switch 35 at a certain rate, as a result of which the signals from the oscillators 36 and 37 are alternately fed to the cathode of diode 31 via buffer 34, which results in frequency modulation of the carrier wave on the basis of frequency shift keying (FSK) either at 2.05 Mhz originating from oscillator 36 and corresponding to logic one or at 1.95 Mhz originating from oscillator 37 and corresponding to logic zero. The closure of switch 49 prevents said signal being fed to processor 40, which could incorrectly interpret it as data transmitted by the detection station. In this way, the tag identification of the tag is transmitted to the detection station, which is consequently able to identify the tag. Of course, said tag identification may contain more information than identification information alone, such as routing information, information relating to the content of the train wagon or the roller container in which the tag is fitted, etc. After the tag has been identified by the station and the tag has received data from the station, said tag identification itself may be composed completely of data blocks which the tag then transmits to the detection station.

If the detection station then transmits data to the tag by amplitude-modulating the carrier wave, for example with the object of altering the routing information in the tag, the modulated carrier wave is received via the transmitting/receiving aerial 30 and demodulated by diode 31. The data are fed via resistor 38 and amplifier 39 to processor 40, which then processes said data. In this situation, switch 49 is in the open state. On receiving data, processor 40 may send a reactivation signal to switch-on means 43 with the object of extending the predetermined time interval.

The tag is of very simple construction, as a result of which it can be produced cheaply in large numbers: diode 31 functions as AM demodulator and as FM modulator, and no expensive measures have to be taken in the tag because any displacement of the tag has a negligible effect on the AM demodulation of the amplitude-modulated carrier wave. Such a displacement can have an appreciable effect on the FM demodulation, carried out by the station, of the frequency-modulated carrier wave (Doppler shift), but this effect can be reduced in the station in a simple way. Furthermore, it is very advantageous that the FM modulation based on reflection takes place in the tag, whereas the AM modulation, which requires appreciably more energy, takes place in the station. The system according to the invention does not, however, have to be confined to the abovementioned modulation methods, other methods being conceivable, such as AM modulation by the station on the basis of ASK, in which the activation signal is provided with a digital codeword to prevent tag collision, and such as phase modulation by the tag on the basis of phase shift keying (PSK), which may also take place on the basis of reflection.

RAM 44 should be continuously provided with voltage. This is achieved via diode 46 as long as switch-on means 43 are not in the activated state and via diode 45 during the predetermined time interval if the switch-on means are in the activated state. If the RAM 44 is replaced by an EEPROM, permanent power supply via diode 46 may of course be omitted.

Switch-on means 43 can be formed in a way which is simple for the person skilled in the art by using two one-shot generators: the first for through-coupling and the second for terminating said through-coupling in the switch-on means between the power supply input and the output after the predetermined time interval. As a result of using said switch-on means, the requirement, frequently imposed, that the tag must be able to function for not less than five years with one battery is adequately met.

The diagram, shown in Figure 3, of successive emission probabilities of tags which are statistically selected in the case of collision to make a subsequent emission is to be interpreted as follows. If the detection station transmits an activation signal to which several tags respond simultaneously by returning their tag identifications, which are consequently each unrecognisable for the detection station, there is a question of collision or colliding tags. The detection station responds thereto by transmitting to all the activated tags data which incorporate a command giving each tag an instruction to return the tag identification yet again with a certain probability (for example, if the last bit of the labelling identification is a logic one, the probability thereof is 50%, see situation S1 in Figure 3, P = 0.5). If one tag complies therewith, said tag is identified and acquires a unique temporary code with which it can be rapidly addressed by the detection station and as a result of which it no longer responds to actions other than said code. If several tags comply with returning with the certain probability, there is again a question of collision. The detection station then transmits data which incorporate a command instructing each tag to return the tag identification yet again with a probability which is now lower (for example, if the last two bits of the tag identification are a logic one and a logic zero, the chance thereof is 25%, see situation S2 in Figure 3, P = 0.25). If one tag complies therewith, said tag is identified and it again acquires a unique temporary code with which it can be rapidly addressed by the detection station and as a result of which it no longer responds to actions other than said code. If several tags comply with returning with the probability which is now less, there is again a question of collision, etc. As soon as a reasonable number of tags have been identified in this way (which number depends on the theoretically maximum number of tags which can be activated simultaneously), there is, however, little point in continuing to reduce the probability because the identification procedure will then require appreciably more time than is necessary. After identifying a reasonable number of tags (situations S1, S2, S3, S4), a command is therefore transmitted giving instruction to return the tag identification with a probability which is now greater (situations S5, S6), etc. Such a solution of the problem of colliding tags can be fed into the processor of the detection station by means of software in a way which is simple for the person skilled in the art, in which connection allowing the magnitude of the probability that a tag responds to depend on the tag identification is only one of the many possibilities (the probability could also depend on certain routing information or content information, or random information to be generated by the tag etc.).

## Claims

1. Tag comprising
- an aerial (30) for receiving a carrier wave which has been modulated with first information according to a first modulation method and for transmitting a signal which has been modulated with second information according to a second modulation method,
- processor means (40) for processing said first information and for generating said second information,
- a diode (31) for demodulating said modulated carrier wave,
characterised in that said second modulation method takes place via said diode (31) which is situated between said aerial (30) and said processor means (40).

2. Tag according to Claim 1, characterised in that said carrier wave has been modulated with an activation signal, the tag comprising
- an activation signal detector (41,42), coupled to said diode (31), for detecting said activation signal,
- power supply means (47,48) for supplying power to said processor means (40), and
- switch-on means (43), coupled to said activation signal detector (41,42) and to said power supply means (47,48), for switching on said power supply means (47,48) in response to said activation signal.

3. Tag according to Claim 2, characterised in that said switch-on means (43) switch on said power supply means (47,48) for a predetermined time interval.

4. Tag according to Claim 3, characterised in that said switch-on means (43) are coupled to said processor means (40) for receiving a reactivation signal from said processor means (40) for extending said predetermined time interval.

5. Tag according to Claim 2, 3 or 4, characterised in that said activation signal detector (41,42) comprises boosting means (41) for boosting said activation signal.

6. Tag according to Claim 2, 3, 4 or 5, characterised in that the tag is provided with filtering means, the frequency of said first information and the frequency of said activation signal being different from one another.

7. Tag according to Claim 1, 2, 3, 4, 5 or 6, characterised in that the first modulation method is based on amplitude modulation and the second modulation method is based on frequency or phase modulation.

8. Tag according to Claim 1, 2, 3, 4, 5, 6 or 7, characterised in that said signal comprises at least a part of a reflection of said carrier wave.

## Patentansprüche

1. Etikett
- mit einer Antenne (30) zum Empfang einer Trägerwelle, die gemäss einem ersten Modulationsverfahren mit einer ersten Information moduliert worden ist, und zum Übertragen eines Signals, welches gemäss einem zweiten Modulationsverfahren mit einer zweiten Information moduliert worden ist,
mit Verarbeitungsmitteln (40) zur Verarbeitung der besagten ersten Information und zur Erzeugung der besagten zweiten Information, und
mit einer Diode (31) zur Demodulation der besagten modulierten Trägerwelle, dadurch gekennzeichnet, dass das zweite Modulationsverfahren über die besagte Diode (31) stattfindet, die zwischen der Antenne (30) und den Verarbeitungsmitteln (40) angeordnet ist.

2. Etikett nach Anspruch 1, dadurch gekennzeichnet, dass die besagte Trägerwelle mit einem Aktivierungssignal moduliert ist, wobei das Etikett umfasst:
- einen Aktivierungssignaldetektor (41, 42), der mit der besagten Diode (31) verbunden ist, um das besagte Aktivierungssignal zu erfassen,
- Spannungsversorgungsmittel, um die Verarbeitungsmittel mit Spannung zu versorgen, und
- Anschaltmittel (43), die mit dem besagten Aktivierungssignaldetektor (41, 42) und den besagten Spannungsversorgungsmitteln (47, 48) verbunden sind, um die besagten Spannungsversorgungsmittel (47, 48) in Antwort auf das besagte Aktivierungssignal anzuschalten.

3. Etikett nach Anspruch 2, dadurch gekennzeichnet, dass die Anschaltmittel (43) die besagten Spannungsversorgungsmittel (47, 48) für ein vorbestimmtes Zeitintervall einschalten.

4. Etikett nach Anspruch 3, dadurch gekennzeichnet, dass die besagten Anschaltmittel mit den Verarbeitungsmitteln (40) verbunden sind, um ein Reaktivierungssignal von den Verarbeitungsmitteln (40) zu erhalten, um das vorbestimmte Zeitintervall zu verlängern.

5. Etikett nach Anspruch 2, 3 oder 4, dadurch gekennzeichnet, dass der Aktivierungssignaldetektor (41, 42) Verstärkungsmittel (41) umfasst, um das Aktivierungssignal zu verstärken.

6. Etikett nach Anspruch 2, 3, 4 oder 5, dadurch gekennzeichnet, dass das Etikett Filtermittel aufweist, wobei die Frequenz der ersten Information und die Frequenz des besagten Aktivierungssignals sich voneinander unterscheiden.

7. Etikett nach Anspruch 1, 2, 3, 4, 5 oder 6, dadurch gekennzeichnet, dass das erste Modulationsverfahren auf der Amplitudenmodulation basiert und dass das zweite Modulationsverfahren auf einer Frequenz- oder Phasenmodulation basiert.

8. Etikett nach Anspruch 1, 2, 3, 4, 5, 6 oder 7, dadurch gekennzeichnet, dass das besagte Signal zumindest einen Anteil einer Reflexion der besagten Trägerwelle umfasst.

## Revendications

1. Etiquette comprenant :
- une antenne (30) destinée à recevoir une onde porteuse qui a été modulée à l'aide d'une première information selon un premier procédé de modulation et destinée à émettre un signal qui a été modulé à l'aide d'une deuxième information selon un deuxième procédé de modulation,
- un moyen de traitement (40) servant à traiter ladite première information et à produire ladite deuxième information,
- une diode (31) servant à démoduler ladite onde porteuse modulée,
caractérisée en ce que ledit deuxième procédé de modulation s'effectue via ladite diode (31) qui est située entre ladite antenne (30) et ledit moyen de traitement (40).

2. Etiquette selon la revendication 1, caractérisée en ce que ladite onde porteuse a été modulée à l'aide d'un signal d'activation, l'étiquette comprenant :
- un détecteur de signal d'activation (41, 42), couplé à ladite diode (31), afin de détecter ledit signal d'activation,
- des moyens d'alimentation électrique (47, 48) servant à fournir de la puissance électrique audit moyen de traitement (40), et
- des moyens de commutation dans l'état conducteur (43), couplés audit détecteur de signal d'activation (41, 42) et audits moyens d'alimentation électrique (47, 48), afin de faire commuter dans l'état conducteur lesdits moyens d'alimentation électrique (47,48) en réponse audit signal d'activation.

3. Etiquette selon la revendication 2, caractérisée en ce que lesdits moyens de commutation dans l'état conducteur (43) font commuter dans l'état conducteur lesdits moyens d'alimentation électrique (47, 48) pendant un intervalle de temps prédéterminé.

4. Etiquette selon la revendication 3, caractérisée en ce que lesdits moyens de commutation dans l'état conducteur (43) sont couplés audit moyen de traitement (40) afin de recevoir un signal de réactivation venant dudit moyen de traitement (40) pour prolonger ledit intervalle de temps prédéterminé.

5. Etiquette selon la revendication 2, 3 ou 4, caractérisée en ce que ledit détecteur de signal d'activation (41, 42) comprend un moyen de suramplification (41) servant à suramplifier ledit signal d'activation.

6. Etiquette selon la revendication 2, 3 4 ou 5, caractérisée en ce que l'étiquette est dotée d'un moyen de filtrage, la fréquence de ladite première information et la fréquence dudit signal d'activation étant différentes l'une de l'autre.

7. Etiquette selon la revendication 1, 2, 3, 4, 5 ou 6, caractérisée en ce que ledit premier procédé de modulation est basé sur une modulation d'amplitude et ledit deuxième procédé de modulation est basé sur une modulation de fréquence ou de phase.

8. Etiquette selon la revendication 1, 2, 3, 4, 5, 6 ou 7, caractérisée en ce que ledit signal comprend au moins une partie d'une réflexion de ladite onde porteuse.
